Europäisches Patentamt

European Patent Office

Office européen des brevets

(19)

(11) Numéro de publication: **0 266 266 B1**

(12) **FASCICULE DE BREVET EUROPEEN**

(45) Date de publication du fascicule du brevet:
22.11.90

(21) Numéro de dépôt: **87402387.2**

(22) Date de dépôt: **23.10.87**

(51) Int. Cl.⁵: **G11B 5/127**, G11B 5/17
// G11B5/31

(54) Procédé de réalisation d'un support magnétique bobiné plan pour têtes magnétiques de lecture et d'enregistrement et support obtenu par ce procédé.

(30) Priorité: **28.10.86 FR 8614975**

(43) Date de publication de la demande:
**04.05.88 Bulletin 88/18**

(45) Mention de la délivrance du brevet:
**22.11.90 Bulletin 90/47**

(84) Etats contractants désignés:
**BE CH DE FR GB IT LI NL**

(73) Titulaire: **COMPAGNIE EUROPEENNE DE COMPOSANTS ELECTRONIQUES LCC, 50, rue Jean -Pierre Timbaud B.P. 301, F-92402 Courbevoie(FR)**

(72) Inventeur: **Rolland, Jean-Luc, THOMSON-CSF SCPI 19, avenue de Messine, F-75008 Paris(FR)**
Inventeur: **Meunier, Paul-Louis, THOMSON-CSF SCPI 19, avenue de Messine, F-75008 Paris(FR)**
Inventeur: **Mage, Jean-Claude, THOMSON-CSF SCPI 19, avenue de Messine, F-75008 Paris(FR)**

(74) Mandataire: **Guérin, Michel et al, THOMSON-CSF SCPI, F-92045 PARIS LA DEFENSE CEDEX 67(FR)**

(56) Documents cités:
FR-A- 2 108 406
US-A- 3 478 341
US-A- 3 672 043
PATENT ABSTRACTS OF JAPAN,
vol. 10, no. 190 (P-474)[2246], 4 juillet 1986, page 36 P 474; & JP-A 61 34 715 (HITACHI LTD) 19-02-1986
PATENT ABSTRACTS OF JAPAN,
vol. 7, no. 184 (P-216)[1329], 13 août 1983, page 46 P 216;
& JP-A-58 85 916 (AKAI DENKI K.K.) 23-05-1983
PATENT ABSTRACTS OF JAPAN,
vol. 10, no. 157 (P-464)[2213], 6 juin 1986, page 50 P 464;
& JP-A-61 9813 (FUJITSU K.K.) 17-01-1986
PATENT ABSTRACTS OF JAPAN, vol. 7, no. 60 (P-182) [1205], 12 mars 1983, page 52 P 182; &

(56) Documents cités: (suite)
JP-A-57 205 810 (MATSUSHITA DENKI SANGYO K.K.) 17-12-1982
PATENT ABSTRACTS OF JAPAN,
vol. 6, no. 183 (P-143)[1061], 18 septembre 1982, page 156 P 143; & JP-A-57 98 120 (DENSHI KEISANKI KIHON GIJUTSU KENKIYUU KUMIAI) 18-06-1982
PATENT ABSTRACTS OF JAPAN, vol. 6, no. 129 (P-128) [1007], 15 juillet 1982, page 53 P 128; &
JP-A-57 53 815 (TOKYO SHIBAURA DENKI K.K.) 31-03-1982

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé de réalisation d'un support magnétique plan et comportant de nombreux bobinages ainsi que le support obtenu par ce procédé. Elle trouve une application dans le domaine de l'enregistrement magnétique en particulier pour la réalisation de têtes de lecture et d'écriture par des technologies couches minces.

Les supports magnétiques pour têtes magnétiques de lecture et d'enregistrement peuvent être classés en deux groupes. Le premier groupe dont les documents FR-A 2 108 406 et JP-A 61-9813 offrent un exemple, concerne les têtes magnétiques qui sont réalisées en deux parties collées et rapportées sur un support. Ces têtes présentent le désavantage d'être entièrement élaborées à la main. Le second groupe concerne les têtes magnétiques réalisées en couche mince sur un substrat non magnétique, par exemple en silicium, ces têtes étant totalement intégrées. La réalisation de ces têtes nécessite une série de masques et des attaques pour gravure. Elles présentent donc le désavantage d'être coûteuses et longues à réaliser.

Pour pallier ces inconvénients, l'invention propose de réaliser un support magnétique à partir d'un substrat plan qui est usiné de façon à obtenir une pluralité de logements ou de supports de bobinages, ces bobinages étant ensuite connectés à des plots conducteurs déposés sur le substrat. L'invention permet une fabrication en série de supports magnétiques en réduisant au minimum les opérations manuelles ou de masquage.

L'invention a donc pour objet un procédé de réalisation d'un support magnétique bobiné plan pour têtes magnétiques de lecture et d'enregistrement à partir d'un substrat dont au moins une face est formée d'un matériau magnétique, caractérisé en ce qu'il comprend les étapes suivantes:
- usinage de ladite face magnétique du substrat pour réaliser des logements pouvant recevoir des fils conducteurs destinés à former les bobinages et pour délimiter de futurs pôles magnétiques,
- dépôt sur l'une ou/et l'autre face du substrat de plots de connexion à raison de deux plots par bobinage,
- mise en place desdits fils conducteurs pour former les bobinages,
- connexion des extrémités des fils de chaque bobinage aux plots de connexion correspondants,
- enduction de ladite face magnétique usinée par un matériau isolant de façon à recouvrir ladite face,
- usinage et polissage de la face enduite jusqu'à la mise à nu des pôles magnétiques.

L'invention a encore pour objet un procédé de réalisation d'un support magnétique bobiné plan pour têtes magnétiques de lecture et d'enregistrement à partir d'un substrat amagnétique, caractérisé en ce qu'il comprend les étapes suivantes:
- usinage initial de l'une des faces du substrat pour réaliser des logements pouvant recevoir des fils conducteurs destinés à former les bobinages et pour délimiter de futurs pôles magnétiques,
- dépôt sur ladite face d'une couche de matériau magnétique,
- dépôt sur l'une ou/et l'autre face du substrat de plots de connexion à raison de deux plots par bobinage,
- mise en place desdits fils conducteurs pour former les bobinages,
- connexion des extrémités des fils de chaque bobinage aux plots de connexion correspondants,
- enduction de la face magnétique du support par un matériau isolant de façon à recouvrir ladite face,
- usinage et polissage de la face enduite jusqu'à la mise à nu des pôles magnétiques.

L'invention sera mieux comprise et d'autres avantages apparaîtront au moyen de la description qui va suivre, donnée à titre non limitatif, et des figures annexées parmi lesquelles:
- la figure 1 est une vue de dessus d'un substrat magnétique selon l'invention;
- les figures 2 et 3 sont des vues de détail du substrat de la figure 1 avec un bobinage mis en place;
- la figure 4 est une vue de dessus d'un autre substrat magnétique selon l'invention;
- les figures 5 et 6 sont des vues de détail du substrat de la figure 4 avec un bobinage mis en place.

Le procédé selon l'invention présente plusieurs variantes de réalisation possibles suivant la direction imposée aux axes des bobinages par rapport au plan du substrat. La description va porter plus précisément sur deux cas particuliers de réalisation. Dans un premier cas l'axe des bobinages sera parallèle au plan du substrat. Dans un second cas cet axe sera perpendiculaire au substrat. Il est bien entendu que toute autre direction ou combinaison de directions entre les axes de bobinage et le plan du substrat entre dans le cadre de l'invention.

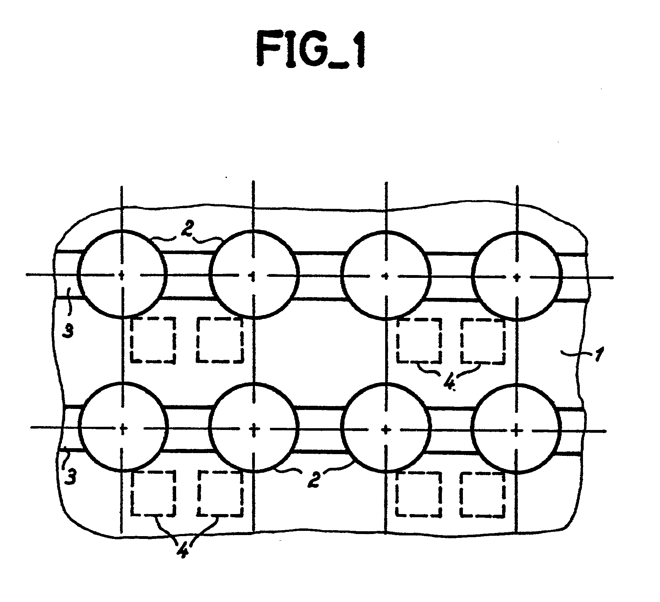

La figure 1 est une vue de dessus d'un substrat magnétique destiné à recevoir des bobinages dont les axes seront parallèles au plan du support. Le substrat 1 est dans ce cas une fine plaque de matériau magnétique constitué par exemple de ferrite. L'épaisseur de la plaque dépend de l'application (numérique, audio, etc.). La plaque est usinée pour obtenir des trous 2 régulièrement espacés ou non et qui traversent toute son épaisseur. Ces trous permettront le passage des fils de bobinage. Le diamètre des trous et leur répartition sur le support seront adaptés au bobinage et à la tête magnétique qui seront réalisés ultérieurement. Actuellement, les diamètres les plus petits à considérer pour les fils de bobinages sont de l'ordre de 30μ. On réalise ensuite des rainures 3 parallèles entre elles, chacune ayant son axe de symétrie confondu avec l'axe d'une rangée de trous 2. La portion de rainure joignant deux trous consécutifs définit donc un logement pouvant recevoir un bobinage. Les dimensions de la rainure seront adaptées aux caractéristiques de ceux-ci. Des plots de connexion 4 sont ensuite réalisés. Il est avantageux de les réaliser sur la face du substrat opposée aux rainures pour éviter d'avoir des fils qui débordent de ces rainures. Si le matériau magnétique constituant le substrat n'est pas suffisamment isolant, il sera nécessaire d'intercaler un matériau isolant entre le substrat et les plots de connexion. A chaque logement de bobinage correspondra deux plots de connexion. Pour des questions d'encombrement, les plots 4 sont disposés le plus près possible du logement de bobinage correspondant comme le montre la figure 1. Les plots 4 sont par exemple réalisés par dépôt d'un matériau conducteur (par sérigraphie, par pulvérisation, par enduction ou par toute autre méthode). Le matériau conducteur peut être de l'or, du cuivre, de l'argent, etc. Ils sont destinés à recevoir les extrémités des bobinages.

Dans les logements prévus à cet effet, on bobine un fil conducteur et les extrémités de chaque bobinage sont conectées sur les plots métalliques. Selon les circonstances, un même trou peut servir pour réaliser deux bobinages. La connexion des extrémités de bobinage sur les plots peut se faire par différentes méthodes connues de l'homme de l'art : soudure, thermocompression, etc.

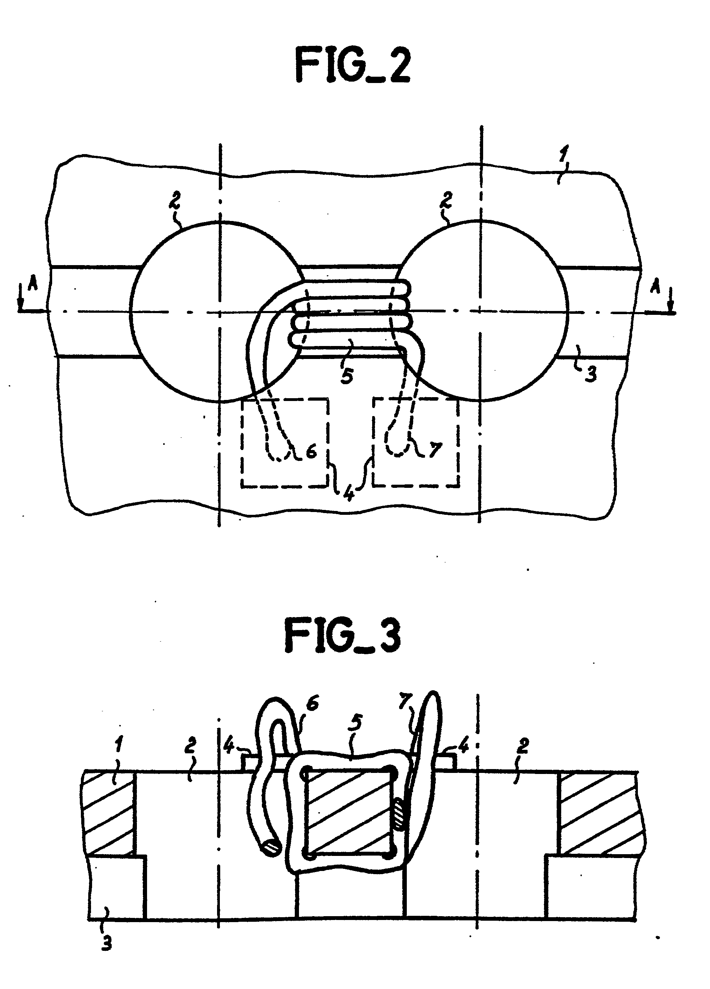

Les figures 2 et 3 sont des vues de détail d'un support magnétique selon l'invention et montrant la disposition d'un bobinage 5 dans son logement. La figure 3 est une vue en coupe AA du support de la figure 2. Les exrémités 6 et 7 du bobinage 5 sont connectées sur les plots 4.

La face pourvue de rainures est alors enduite d'un matériau isolant (verre à bas point de fusion, résine, etc.) qui fixe les bobinages dans leurs logements et qui recouvre les trous. L'enduction est effectuée de façon à recouvrir toute la face du substrat. Cette même face est ensuite usinée et polie de façon à obtenir une face plane sur laquelle alternent les pavés magnétiques et isolants. La profondeur des rainures est suffisamment grande pour que les bobinages ne débordent pas de leur logement. Par sciage du support magnétique ainsi constitué, selon sa longueur et sa largeur, on obtient des éléments individuels comportant chacun un bobinage terminé par deux plots de connexion et un circuit magnétique dont les pôles sont séparés par un matériau isolant.

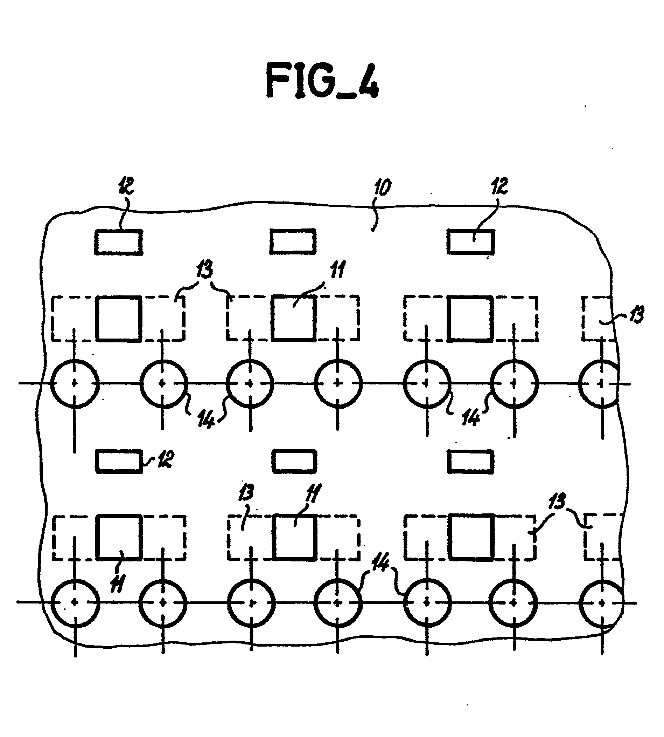

La figure 4 est une vue de dessus d'un substrat magnétique destiné à recevoir des bobinages dont les axes seront perpendiculaires au plan du support. On réalise deux séries d'entailles sur une face du substrat 10. Ces entailles sont par exemple réalisées selon la largeur et la longueur de la plaque formant le substrat. Elles sont régulièrement espacées et définissent des plots 11 et 12 qui peuvent être de mêmes dimensions ou de dimensions différentes comme le montre la figure 4. Les plots 11 sont destinés à recevoir les bobinages qui déterminent la taille des plots de bobinage.

On dépose ensuite sur l'autre face du substrat des plots de connexion 13 qui peuvent être obtenus comme il est indiqué plus haut. Ils sont destinés à recevoir les extrémités des bobinages qui seront mis en place autour des plots 11. Pour permettre le passage de ces extrémités des bobinages, on perce des trous 14 dans l'épaisseur du substrat à raison de deux trous par bobinage. Pour des commodités de réalisation du sciage final, il est préférable de prévoir un trou par fil de bobinage comme le montre la figure 4. Si on veut faire passer les extrémités de deux bobinages dans la même trou, les trous seront de préférence usinés sous forme d'ouvertures allongées afin de faciliter le sciage.

Du fil conducteur est alors bobiné autour des plots 11. Les extrémités des bobinages sont passées dans les trous 14 les plus proches du plot de bobinage correspondant et sont connectées sur les plots métalliques 13 situés sur l'autre face du substrat 10.

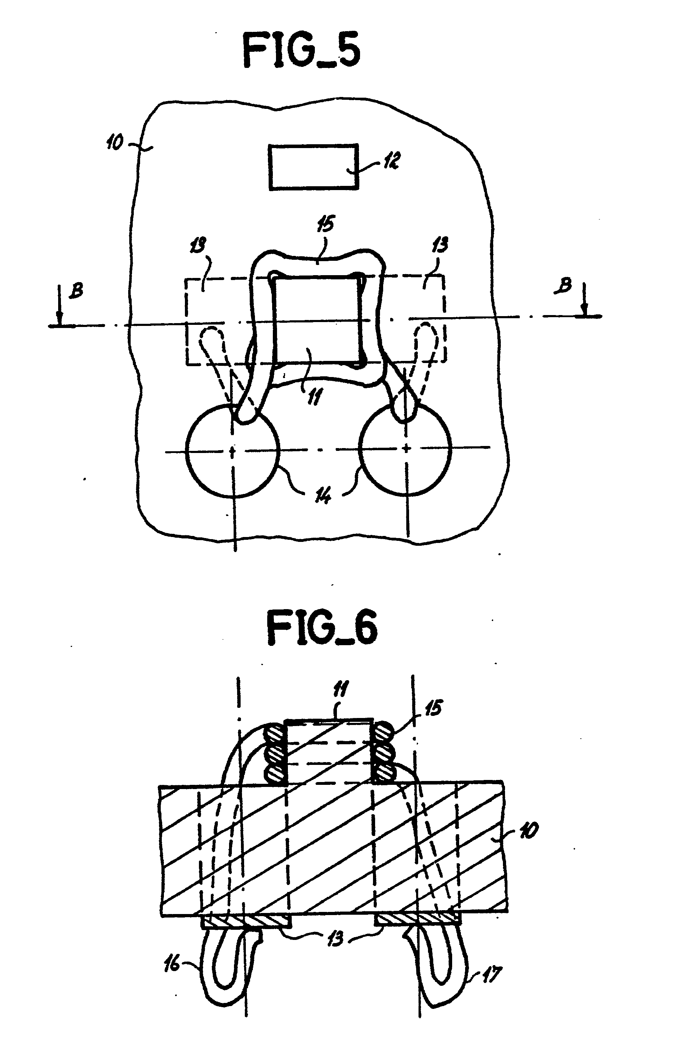

Les figures 5 et 6 sont des vues de détail du support magnétique de la figure 4. La figure 6 est une coupe BB de la figure 5. Elles montrent la disposition d'un bobinage 15 dont les extrémités 16 et 17 sont connectées sur les plots de connexion 13 après passage dans les trous 14.

La face du substrat supportant les bobinages est, comme précédemment, enduite d'un matériau isolant qui fixe les bobinages autour de leur plot. L'enduction est effectuée de façon à recouvrir toute la surface du substrat. Après usinage et polissage, cette face du support présente des pavés magnétiques affleurant d'une surface isolante. Par sciage du support on obtient des éléments individuels comportant chacun un bobinage noyé dans la matière isolante et accessible par deux plots de connexion, et un circuit magnétique dont les pôles sont constitués par les plots 11 et 12.

Un autre avantage du procédé selon l'invention est de permettre la réalisation d'un support magnétique plan comportant un nombre important de petits bobinages.

D'autres variantes de réalisation sont encore possibles tout en restant dans le cadre de l'invention. Le substrat de départ peut être formé d'une plaque d'un matériau non magnétique recouvert d'une couche de matériau magnétique. Un substrat en matériau amagnétique peut d'abord être usiné puis la face usinée peut être recouverte d'un matériau magnétique. Dans ce cas, la couche magnétique déposée (par des méthodes de "sputtering", de croissance électrolytique, par la technique CVD) peut avoir une épaisseur de l'ordre de 2 à 20μ. Les plots de connexion peuvent être situés sur la face usinée et dans le cas de la variante illustrée par les figures 4 à 6 les trous traversant le substrat deviennent alors inutiles. Les plots de connexion peuvent aussi être déposés sur les deux faces du substrat. L'usinage du substrat peut être effectué par voie chimique. Par exemple, un substrat en silicium peut être gravé par une base selon les techniques employées dans le domaine des VMOS.

Le procédé de réalisation selon l'invention peut être complété par l'ajout, sur le support magnétique, d'éléments nécessaires à la constitution de têtes magnétiques et être suivi d'un traitement collectif de découpe des têtes magnétiques obtenues. La découpe peut être effectuée par un sciage mécanique, à l'aide d'un rayon laser, par voie chimique ou par toute autre méthode appropriée.

**Revendications**

1. Procédé de réalisation d'un support magnétique bobiné plan pour têtes magnétiques de lecture et d'enregistrement à partir d'un substrat (1, 10) dont au moins une face est formée d'un matériau magnétique, caractérisé en ce qu'il comprend les étapes suivantes:
- usinage initial de ladite face magnétique du substrat (1, 10) pour réaliser des logements pouvant recevoir des fils conducteurs destinés à former les bobinages (5, 15) et pour délimiter de futurs pôles magnétiques,
- dépôt sur l'une ou/et l'autre face du substrat (1, 10) de plots (4, 13) de connexion à raison de deux plots (4, 13) par bobinage (5, 15),
- mise en place desdits fils conducteurs pour former les bobinages (5, 15),
- connexion des extrémités (6, 7, 16, 17) des fils de chaque bobinage (5, 15) aux plots de connexion correspondants (4, 13),
- enduction de ladite face magnétique usinée par un matériau isolant de façon à recouvrir ladite face,
- usinage et polissage de la face enduite jusqu'à la mise à nu des pôles magnétiques.

2. Procédé de réalisation d'un support magnétique bobiné plan pour têtes magnétiques de lecture et d'enregistrement à partir d'un substrat (1, 10) amagnétique, caractérisé en ce qu'il comprend les étapes suivantes:
- usinage initial de l'une des faces du substrat (1, 10) pour réaliser des logements pouvant recevoir des fils conducteurs destinés à former les bobinages (5, 15) et pour délimiter de futurs pôles magnétiques,
- dépôt sur ladite face d'une couche de matériau magnétique,
- dépôt sur l'une ou/et l'autre face du substrat (1, 10) de plots (4, 13) de connexion à raison de deux plots (4, 13) par bobinage (5, 15),
- mise en place desdits fils conducteurs pour former les bobinages (5, 15),
- connexion des extrémités (6, 7, 16, 17) des fils de chaque bobinage (5, 15) aux plots de connexion correspondants (4, 13),
- enduction de la face magnétique du support par un matériau isolant de façon à recouvrir ladite face,
- usinage et polissage de la face enduite jusqu'à la mise à nu des pôles magnétiques.

3. Procédé selon l'une des revendications 1 ou 2, caractérisé en ce que l'usinage initial du substrat (1) comprend des opérations de perçage de trous (2) traversant le substrat de part en part et de rainurage, une rainure (3) réunissant au moins deux trous définissant un logement assurant le support d'un bobinage (5).

4. Procédé selon l'une des revendications 1 ou 2, caractérisé en ce que l'usinage initial du substrat (10) comprend des opérations de rainurage transversal et longitudinal de façon à définir des plots (11, 12) servant à supporter les bobinages (15) et des pôles magnétiques, et des opérations de perçage de trous (14) traversant le substrat de part en part et permettant la connexion des extrémités (16, 17) des bobinages sur les plots de connexion (13) situés sur la face du substrat opposés aux bobinages.

5. Procédé selon l'une quelconque des revendications 1 à 4, caractérisé en ce que l'usinage initial du substrat est réalisé chimiquement.

6. Procédé selon l'une quelconque des revendications 1 à 5, caractérisé en ce que le support magnétique obtenu est ensuite équipé des éléments nécessaires à la constitution de têtes magnétiques, puis subit un traitement collectif de découpe.

7. Procédé selon la revendication 6, caractérisé en ce que ladite découpe est effectuée par sciage mécanique.

8. Procédé selon la revendication 6, caractérisé en ce que ladite découpe est effectuée à l'aide d'un rayon laser.

9. Procédé selon la revendication 6, caractérisé en ce que ladite découpe est effectuée chimiquement.

**Claims**

1. A method of producing a planar wound magnetic support for reading and recording magnetic heads starting with a substrate (1, 10) of which at least one face is formed by a magnetic material, characterized in that it comprises the following stages:
– initial machining of the said magnetic face of the substrate (1, 10) in order to produce sockets able to receive conductor wires destined to form windings (5, 15) and in order to delimit the eventual magnetic poles,
– deposit on one and/or the other face of the substrate (1, 10) of connection studs (4, 13) at the rate of two studs (4, 13) for each winding (5, 15),
– placement of the said conductor wires in order to form windings (5, 15),
– connection of the ends of the wires (6, 7, 16, 17) of each winding (5, 15) with the corresponding connection studs (4, 13),
– coating of the said magnetic machined face with an insulating material in such a manner as to cover the said face, and
– machining and polishing of the coated face to such an extent as to expose the magnetic poles.

2. A method for the production of a planar wound magnetic support for reading and recording magnetic heads starting from a non-magnetic substrate (1, 10), characterized in that it comprises the following stages:
– initial machining of one of the faces of the substrate (1, 10) in order to produce sockets able to receive conductor wires destined to form windings (5, 15) and in order to delimit eventual magnetic poles,
– deposit on the said face of a layer of magnetic material,
– deposit on one and/or the other of the faces of the substrate (1, 10) of connection studs (4, 13) at the rate of two studs (4, 13) for each winding (5, 15),
– placement of the said conductor wires in order to form the windings (5, 15),
– connection of the ends of the wires (6, 7, 16, 17) of each winding (5, 15) to the corresponding connection studs (4, 13),
– coating of the magnetic face of the support with an insulating material in such a manner as to cover the said face,
– machining and polishing of the coated face to such an extent as to expose the magnetic poles.

3. The method as claimed in claim 1 or in claim 2, characterized in that the initial machining of the substrate (1) comprises piercing operations to produce holes (2) through the substrate from side to side and grooving operations, one groove (3) uniting at least two holes defining a socket for supporting a winding (5).

4. The method as claimed in claim 1 or in claim 2, characterized in that the initial machining of the substrate (10) comprises transverse and longitudinal grooving operations in such a manner as to define studs (11 and 12) serving to support the windings (15) and magnetic poles, and piercing operations to produce holes (14) through the substrate from side to side and making possible the connection of the ends (16 and 17) of the windings on the connection studs (13) situated on the face of the substrate opposite to the windings.

5. The method as claimed in any one of the preceding claims 1 through 4, characterized in that the initial machining of the substrate is performed chemically.

6. The method as claimed in any one of the preceding claims 1 through 5, characterized in that the magnetic support produced is then fitted with elements necessary to constitute magnetic heads and is then subjected to a collective cutting up operations.

7. The method as claimed in claim 6, characterized in that the said cutting up is effected by mechanical sawing.

8. The method as claimed in claim 6, characterized in that the said cutting up is effected with the aid of a laser beam.

9. The method as claimed in claim 6, characterized in that the said cutting up is effected chemically.

**Patentansprüche**

1. Verfahren zum Herstellen eines gewickelten, ebenen, magnetischen Trägers für Magnetköpfe zum Lesen und zum Aufnehmen, ausgehend von einem Substrat (1, 10), wovon wenigstens eine Fläche aus einem magnetischen Material besteht, dadurch gekennzeichnet, daß es die folgenden Phasen umfaßt:
– die genannte magnetische Fläche des Substrats (1, 10) wird anfangs bearbeitet, um Aufnahmen zu bilden, die Leiterdrähte aufnehmen können, welche dazu bestimmt sind, die Wicklungen (5, 15) zu bilden, und um künftige magnetische Pole abzugrenzen;
– auf der einen oder/und auf der anderen Fläche des Substrats (1, 10) werden Anschlußklötzchen (4, 13), und zwar zwei Klötzchen (4, 13) pro Wicklung (5, 15), angebracht;
– die genannten Leiterdrähte werden angeordnet, um die Wicklungen (5, 15) zu bilden;
– die Enden (6, 7, 16, 17) der Drähte jeder Wicklung (5, 15) werden an die entsprechenden Anschlußklötzchen (4, 13) angeschlossen;
– die genannte bearbeitete Magnetfläche wird mit einem Isoliermaterial überzogen, so daß diese Fläche bedeckt wird;
– die überzogene Fläche wird bearbeitet und poliert bis zur Bloßlegung der Magnetpole.

2. Verfahren zum Herstellen eines gewickelten, ebenen, magnetischen Trägers für Magnetköpfe zum Lesen und zum Aufnehmen, ausgehend von einem unmagnetischen Substrat (1, 10), dadurch gekennzeichnet, daß es die folgenden Phasen umfaßt:
– eine der Flächen des Substrats (1, 10) wird anfangs bearbeitet, um Aufnahmen zu bilden, welche Leiterdrähte aufnehmen können, die dazu bestimmt sind, die Wicklungen (5, 15) zu bilden, sowie um künftige magnetische Pole abzugrenzen;
– auf dieser Fläche wird eine Schicht aus einem magnetischen Material angebracht;
– auf der einen oder/und auf der anderen Fläche des Substrats (1, 10) werden Anschlußklötzchen (4, 13) angebracht, und zwar zwei Klötzchen (4, 13) pro Wicklung (5, 15);
– die genannten Leiterdrähte werden angeordnet, um die Wicklungen (5, 15) zu bilden;
– die Enden (6, 7, 16, 17) der Drähte jeder Wicklung (5, 15) werden an die entsprechenden Anschlußklötzchen (4, 13); angeschlossen;
– die magnetische Fläche des Trägers wird mit einem Isoliermaterial überzogen, so daß diese Fläche bedeckt wird;
– die überzogene Fläche wird bearbeitet und poliert bis zur Bloßlegung der magnetischen Pole.

3. Verfahren nach Anspruch 1 oder 2, dadurch gekennzeichnet, daß die Anfangsbearbeitung des Substrats (1) Schritte zum Bohren von Löchern (2), die das Substrat vollständig durchqueren, sowie zum Riffeln umfaßt, wobei eine Rille (3) wenigstens zwei Löcher vereint, die eine das Haltern einer Wicklung (5) gewährleistende Aufnahme bilden.

4. Verfahren nach Anspruch 1 oder 2, dadurch gekennzeichnet, daß die Anfangsbearbeitung des Substrats (10) Arbeitsgänge zum Riffeln in der Quer- und Längsrichtung umfaßt, so daß Klötzchen (11, 12), die dazu dienen, die Wicklungen (15) sowie magnetische Pole zu tragen, definiert werden, sowie Schritte zum Bohren von Löchern (14) umfaßt, die das Substrat vollständig durchqueren und den Anschluß der Enden (16, 17) der Wicklungen an die Anschlußklötzchen (13), die auf der den Wicklungen entgegengesetzten Fläche angeordnet sind, ermöglichen.

5. Verfahren nach einem der Ansprüche 1 bis 4, dadurch gekennzeichnet, daß die Anfangsbearbeitung des Substrats chemisch erfolgt.

6. Verfahren nach einem der Ansprüche 1 bis 5, dadurch gekennzeichnet, daß der erhaltene magnetische Träger danach mit Elementen, die für die Bildung der Magnetköpfe notwendig sind, versehen wird, und dann einer gemeinsamen Abtrennbehandlung unterzogen wird.

7. Verfahren nach Anspruch 6, dadurch gekennzeichnet, daß das genannte Abtrennen durch mechanisches Sägen erfolgt.

8. Verfahren nach Anspruch 6, dadurch gekennzeichnet, daß das genannte Abtrennen mittels Laserstrahls erfolgt.

9. Verfahren nach Anspruch 6, dadurch gekennzeichnet, daß das genannte Abtrennen chemisch erfolgt.

# FIG_1

# FIG_2

# FIG_3

# FIG_4

## FIG_5

## FIG_6